# FASCICULE DE BREVET EUROPEEN

(11) **EP 3 524 505 B1**
(45) Date de publication et mention de la délivrance du brevet: **24.04.2024**
(21) Numéro de dépôt: 19155611.7
(22) Date de dépôt: 05.02.2019
(51) Int. Cl.: B63B 29/02, G03B 21/10

(54) **NAVIRE COMPORTANT UN LIEU DE VIE AVEC DES MOYENS DE PROJECTION D'IMAGES**
SCHIFF, DAS EINEN LEBENSRAUM MIT BILDPROJEKTIONSMITTELN UMFASST
VESSEL COMPRISING A LIVING SPACE WITH MEANS FOR IMAGE PROJECTION

(30) Priorité: 13.02.2018 FR 1851187
(43) Date de publication de la demande: 14.08.2019
(73) Titulaire: Chantiers de l'Atlantique, 44600 Saint Nazaire Cedex (FR)
(72) Inventeur: ROUXEL-DUVAL, Laurent, 44380 PORNICHET (FR); CARON, Cyrille, 44510 LE POULIGUEN (FR); JANVIER, François, 44250 SAINT-BREVIN LES PINS (FR); MONEUSE, Nicolas, 44500 LA BAULE - ESCOUBLAC (FR)
(74) Mandataire: Regimbeau

(56) Documents cités:
- EP-A1- 3 068 133
- CN-U- 202 624 589
- FR-A1- 2 399 264
- JP-A- 2017 136 991
- KR-A- 20160 027 266
- Anonymous: "Royal Caribbean Virtual Balcony: Everything you wanted to know | Royal Caribbean Blog", , 14 August 2015 (2015-08-14), pages 1-8, XP093107162, Retrieved from the Internet: URL:https://www.royalcaribbeanblog.com/201 5/08/14/royal-caribbean-virtual-balcony-ev erything-you-wanted-know [retrieved on 2023-11-29]

## Description

### DOMAINE DE L'INVENTION

La présente invention est relative à un navire comportant un lieu de vie avec des moyens de projection d'images, ledit lieu de vie consistant en une cabine.

Plus spécifiquement, il s'agit d'un navire à passagers, qui comporte au moins un lieu de vie qui est délimité verticalement par au moins trois cloisons contiguës deux à deux, chacune de ces cloisons étant aveugle, c'est-à-dire dépourvue d'ouvertures telles qu'une fenêtre ou une porte, ce lieu de vie comportant également un plafond contigu aux trois cloisons précitées.

### ARRIERE-PLAN TECHNOLOGIQUE DE L'INVENTION

Dans l'ensemble de la présente demande, on entend par l'expression "lieu de vie" aussi bien un espace fermé recevant des passagers, tel qu'une cabine, qu'un espace ouvert, dans lequel on pénètre sans avoir à ouvrir une porte ou élément similaire.

Dans les navires à passagers tels que les paquebots existants, de nombreux lieux de vie tels que des cabines ou des salons présentent des ouvertures communiquant avec l'extérieur. Il s'agit à minima d'un hublot, mais il peut aussi s'agir d'une baie vitrée, voire d'une baie coulissante donnant par exemple accès à un balcon.

Toutefois, il existe un certain nombre de cabines dont les différentes cloisons à l'exception d'une seule sont aveugles, ce qui signifie qu'aucune de ces cloisons ne communique sur l'extérieur par une ouverture telle que celles qui viennent d'être citées.

Ainsi, par exemple, on peut avoir affaire à certaines cabines, dont l'accès est bien entendu constitué par une porte, mais qui débouche sur un local formant la cabine qui est complètement aveugle.

Bien que l'aménagement de telles cabines soit étudié pour que son utilisateur n'ait pas un sentiment d'espace confiné, il manque à ces cabines un environnement qui éviterait totalement à cet utilisateur ce risque de ressenti quelque peu désagréable.

Par ailleurs, les règles de l'art dans l'agencement de la zone de couchage ou de repos d'une cabine, ou plus généralement d'un lieu de vie tel qu'un salon, exige de ménager un espace aussi large que possible autour du lit (ou des lits, ou encore des fauteuils) pour en faciliter l'accès et augmenter le sentiment d'espace autour et surtout face à ce mobilier. Cela conduit à adosser la tête de lit à l'une des cloisons et à maximiser l'espace au pied du lit ainsi que sur ses côtés quand cela est possible.

Néanmoins, lorsque l'on a affaire, comme indiqué précédemment à des cabines aveugles, malgré cet agencement particulier, le sentiment de manque d'espace peut être réellement présent.

L'art antérieur en la matière peut être illustré notamment par les documents JP2017136991, EP3068133, KR20160027266, CN202624589, FR2399264 et la page web www.royalcaribbeanblog.com/2015/08/14/royal-caribeean-virtual-balcony-everything-you-wanted-know

La présente invention a pour but de pallier les problèmes exposés plus haut en proposant un navire à passagers dont les cabines aveugles sont agencées de manière à permettre à l'utilisateur de ne pas se sentir confiné dans l'espace correspondant.

### RESUME DE L'INVENTION

Ainsi, la présente invention se rapporte à un navire à passagers, qui comporte au moins un lieu de vie constitué par une cabine qui est délimité verticalement par au moins trois cloisons contiguës, chacune de ces cloisons étant aveugle, c'est-à-dire dépourvue d'ouvertures telles qu'une fenêtre ou une porte, ledit lieu de vie comportant également un plafond contigu aux dites trois cloisons, caractérisé par le fait que ledit plafond intègre un caisson dans lequel sont positionnés des appareils de projection d'images, lesquels sont respectivement orientés de manière à projeter chacun des images sur l'une desdites trois cloisons, que ledit caisson est fermé par au moins une plaque avec des ouvertures pour le passage du flux lumineux desdits appareils, et que ladite cabine comporte un lit dont la tête est orientée dans la direction opposée de celle de la deuxième desdites trois cloisons.

Grâce à ces caractéristiques distinctives, il est donc possible de projeter simultanément sur les cloisons des images fixes ou animées, ce qui fait que l'occupant d'un tel lieu de vie a l'impression d'être en quelque sorte plongé dans ces images, si bien qu'il oublie le sentiment d'espace confiné lié à ce type de lieu de vie.

Au contraire, il a un réel sentiment d'espace et ce d'autant que le lit est implanté selon une configuration particulière bien différente de ce qui se pratique habituellement. Selon d'autres caractéristiques avantageuses et non limitatives de ce navire :
- lesdits appareils de projection d'images sont des appareils à ultra-courte focale ;
- ledit caisson occupe seulement une partie du plafond de ladite cabine, et ledit caisson est encastré au moins partiellement dans le plafond, de sorte que ladite plaque s'étend soit au même niveau, soit à un niveau légèrement différent de celui dudit plafond ;
- ledit caisson accueille également des moyens de sonorisation ;
- ladite plaque de fermeture dudit caisson constitue une surface de diffusion d'ondes sonores, ces dernières étant générées par au moins un excitateur audio ;
- lesdites trois cloisons sont nues et dépourvues d'aspérités.

### BREVE DESCRIPTION DES DESSINS

D'autres caractéristiques de l'invention apparaîtront à la lecture de la description qui va suivre d'un mode de réalisation préférentiel.

Cette description sera faite en référence aux dessins annexés dans lesquels :
- la figure 1 est une vue de dessus, selon un plan de coupe horizontal d'une cabine d'un navire conforme à l'invention ;
- la figure 2 est une vue de dessous, toujours selon le même plan de coupe, de la cabine de la figure 1 ;
- la figure 3 est également une vue de cette même cabine, mais selon un plan de coupe vertical et longitudinal ;
- la figure 4 est une vue en perspective d'une partie du plafond d'une telle cabine montrant plus particulièrement un caisson équipé d'appareils de projection d'images :
- la figure 5 est une vue en perspective de ces appareils de projection d'images ainsi que des moyens qui permettent leur fixation relativement au caisson ;
- la figure 6 est une vue en perspective d'une plaque destinée à obturer le caisson de la figure 4.

### DESCRIPTION DETAILLEE DE L'INVENTION

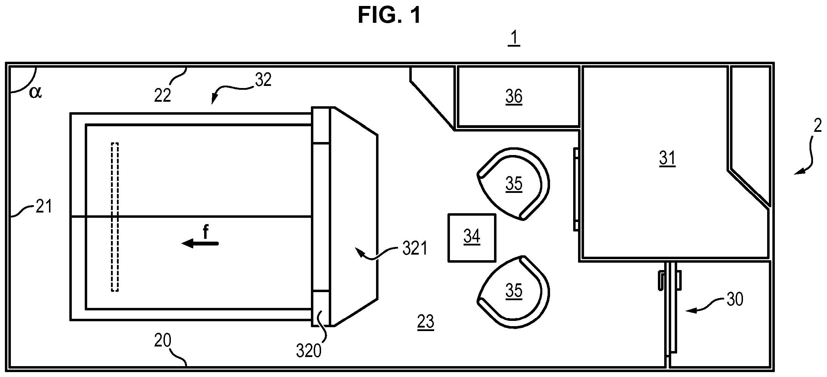

En se référant aux figures 1 à 3 annexées, on a affaire à une cabine 2 présentant une structure générale connue en soi.

On ne reviendra pas très en détails sur la structure même de la cabine 2 car cela n'est pas l'objet de la présente invention.

Dans l'exemple représenté ici, la cabine 2 présente une forme parallélépipédique. Elle est de préférence fabriquée à terre et mise en place à l'intérieur du navire lors de sa construction, ainsi que cela est bien connu en soi.

Elle est notamment délimitée par une porte d'entrée 30 qui jouxte une salle de bains 31, porte d'entrée 30 qui donne accès au lieu de vie qui est essentiellement délimité par trois cloisons contiguës, à savoir deux cloisons longitudinales et parallèles 20 et 22 et une cloison transversale de fond 21.

Dans l'exemple présenté ici, ces trois cloisons contigües 20, 21 et 22 forment deux à deux un angle α qui est un angle droit. Toutefois, dans un mode de réalisation non représenté ici, cet angle pourrait être légèrement différent de 90°.

Préférentiellement, ces cloisons sont nues et dépourvues de toute aspérité, pour des raisons que l'on expliquera plus loin.

Dans cet exemple de réalisation, on a affaire, à l'intérieur de la cabine 2, à un mobilier relativement courant. Il s'agit tout particulièrement d'un lit 32 dont la tête de lit 320 est attenante à un meuble d'appoint 321. On a aussi affaire à un meuble 36 formant penderie qui jouxte la salle de bains 31. Le mobilier comprend également deux fauteuils 35 et une table basse 34.

Contrairement à l'agencement habituel d'une cabine, on note aussi que le lit 32 n'est pas adossé à l'une des cloisons de la cabine mais occupe une disposition centrale sur le sol 23 et la tête de lit 320 est dirigée vers et à distance de la deuxième cloison 21, ce qui va à l'encontre de l'agencement d'un mobilier habituel. Ce faisant, tous les autres éléments de mobilier autres que le lit, sont disposés derrière ce dernier.

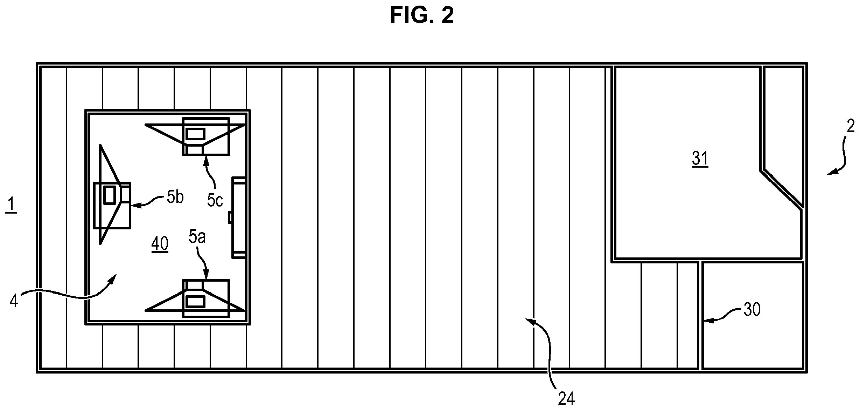

Ainsi que le montrent plus particulièrement les figures 2, 3 et 4, le plafond 24 comporte, c'est à dire renferme, un caisson 4 présentant un fond 40. Ce caisson est peu profond et accueille trois appareils de projection d'images et référencés 5a, 5b et 5c.

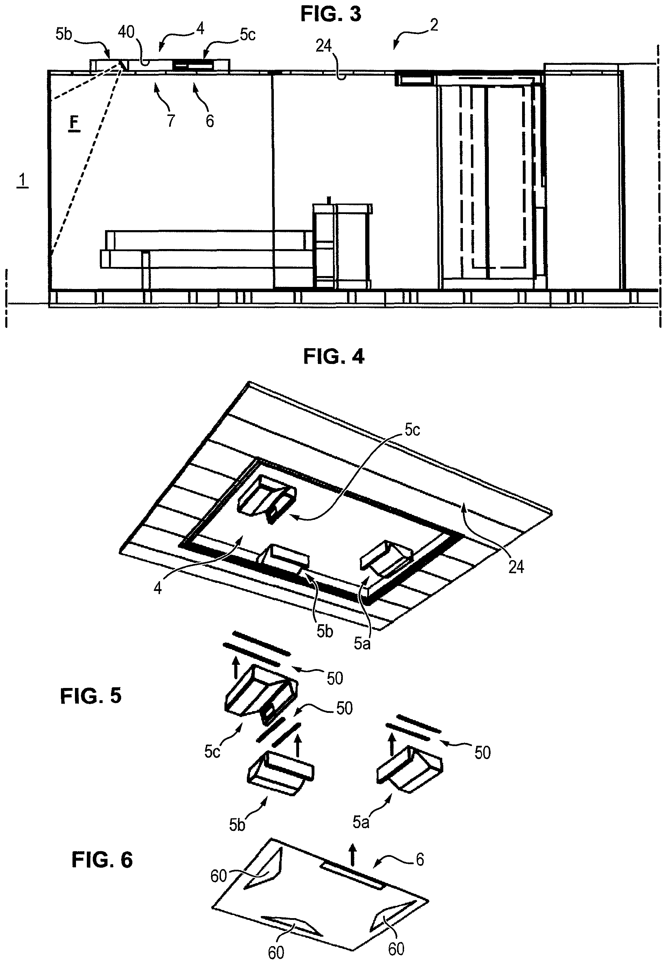

Ces appareils sont par exemple fixés au fond du caisson par des brides visibles à la figure 5 et chacun d'entre eux est orienté vers l'une des trois cloisons contigües 20, 21 et 22. En l'occurrence, l'appareil 5a est dirigé vers la cloison 20, l'appareil 5b est dirigé vers la cloison 21, tandis que l'appareil 5c est dirigé vers la cloison 22.

Il s'agit d'appareils de projection d'images de type connu, de préférence à ultra-courte focale de manière à limiter les effets d'interférence entre le faisceau de projection de tels appareils et les occupants de la cabine qui peuvent se déplacer librement dans l'espace.

Préférentiellement, ces trois appareils sont prévus pour projeter un contenu vidéo coordonné sur trois cloisons 20 à 22 et créer ainsi pour le spectateur un effet immersif.

Ce caisson est fermé par une plaque 6 représentée à la figure 6 qui présente trois ouvertures 60 positionnées et dimensionnées de manière à laisser passer le flux lumineux de chacun des appareils, ainsi que cela est représenté à la figure 3 sous la lettre F.

La plaque 6 précitée peut également servir de surface de diffusion sonore par l'utilisation d'excitateurs audio fixés sur sa face supérieure et ainsi dissimulés de la vue des occupants.

Le caisson peut également contenir le serveur vidéo servant au stockage et au traitement des contenus vidéo et audio, ainsi que l'amplificateur alimentant les excitateurs sonores. Lorsque le caisson 4 est fermé, la plaque 6 se trouve au même niveau et dans la continuité du plafond 24, de sorte que l'ensemble de l'équipement visuel et audio est complètement invisible pour les occupants de la cabine.

Ainsi, cette installation constitue un ensemble intégré et compact qui s'intègre de façon harmonieuse et discrète au plafond de la cabine.

Toutefois, dans un autre mode de réalisation non représenté ici, ledit caisson 4 est encastré seulement partiellement dans le plafond 24, de sorte qu'il forme un léger décrochage par rapport à ce dernier.

Dans un mode particulier d'utilisation, le système peut servir à la diffusion d'une image simple et fixe sur une cloison unique et remplace alors avantageusement les fonctionnalités d'une télévision avec un écran de plus grandes dimensions et un système de diffusion sonore de qualité.

La présente invention permet ainsi d'assurer une projection sur trois cloisons, de préférence lisses, et disponibles en permanence, ce qui n'est pas possible avec une disposition traditionnelle de cabine qui nécessiterait l'ajout d'un écran amovible ou pliable complexe et présentant des aspérités, tout en enfermant totalement le lit.

L'utilisation de cloisons existantes et d'un agencement particulier du mobilier n'est donc pas naturelle à l'homme de l'art des dispositifs de projection, ni à celui des agencements de cabines.

## Revendications

1. Navire à passagers (1), qui comporte au moins un lieu de vie constitué par une cabine (2) qui est délimité verticalement par au moins trois cloisons contiguës (20, 21, 22), chacune de ces cloisons (20, 21, 22) étant aveugle, c'est-à-dire dépourvue d'ouvertures telles qu'une fenêtre ou une porte, ledit lieu de vie (2) comportant également un plafond (24) contigu aux dites trois cloisons (20, 21, 22), **caractérisé par le fait que** ledit plafond (24) intègre un caisson (4) dans lequel sont positionnés des appareils de projection d'images (5a, 5b, 5c), lesquels sont respectivement orientés de manière à projeter chacun des images sur l'une desdites trois cloisons (20, 21, 22), que ledit caisson (4) est fermé par au moins une plaque (6) avec des ouvertures (60) pour le passage du flux lumineux (F) desdits appareils, et que ladite cabine (2) comporte un lit (32) dont la tête (320) est orientée dans la direction opposée de celle de la deuxième (21) desdites trois cloisons (20, 21, 22).

2. Navire (1) selon la revendication 1, **caractérisé par le fait que** lesdits appareils de projection d'images (5a, 5b, 5c) sont des appareils à ultra-courte focale.

3. Navire (1) selon l'une des revendications 1 ou 2, dans lequel ledit caisson (4) occupe seulement une partie du plafond (24) de ladite cabine (2), **caractérisé par le fait que** ledit caisson (4) est encastré au moins partiellement dans le plafond (24), de sorte que ladite plaque (6) s'étend soit au même niveau, soit à un niveau légèrement différent de celui dudit plafond (24).

4. Navire (1) selon l'une des revendications précédentes, **caractérisé par le fait que** ledit caisson (4) accueille également des moyens de sonorisation (7).

5. Navire (1) selon la revendication 4, **caractérisé par le fait que** ladite plaque de fermeture dudit caisson (4) constitue une surface de diffusion d'ondes sonores, ces dernières étant générées par au moins un excitateur audio.

6. Navire (1) selon l'une des revendications précédentes, **caractérisé par le fait que** lesdites trois cloisons (20, 21, 22) sont nues et dépourvues d'aspérités.

## Patentansprüche

1. Passagierschiff (1), das mindestens einen Lebensraum aufweist, der von einer Kabine (2) gebildet wird, die vertikal von mindestens drei aneinanderstoßenden Trennwänden (20, 21, 22) begrenzt ist, wobei jede dieser Trennwände (20, 21, 22) blind ist, das heißt, keine Öffnungen wie ein Fenster oder eine Tür hat, wobei der Lebensraum (2) ebenfalls eine Decke (24) aufweist, die an die drei Trennwände (20, 21, 22) anstößt, **dadurch gekennzeichnet, dass** die Decke (24) einen Kasten (4) integriert, in dem Bildprojektionsapparate (5a, 5b, 5c) positioniert sind, die jeweils derart ausgerichtet sind, dass jeder Bilder auf eine der drei Trennwände (20, 21, 22) projiziert, dass der Kasten (4) von mindestens einer Platte (6) mit Öffnungen (60) für den Durchgang des Lichtstroms (F) der Apparate verschlossen ist und dass die Kabine (2) ein Bett (32) aufweist, dessen Kopf (320) in der entgegengesetzten Richtung zu der Richtung der zweiten (21) der drei Trennwände (20, 21, 22) ausgerichtet ist.

2. Schiff (1) nach Anspruch 1, **dadurch gekennzeichnet, dass** die Bildprojektionsapparate (5a, 5b, 5c) Apparate mit ultrakurzer Brennweite sind.

3. Schiff (1) nach einem der Ansprüche 1 oder 2, wobei der Kasten (4) nur einen Teil der Decke (24) der Kabine (2) belegt, **dadurch gekennzeichnet, dass** der Kasten (4) mindestens zum Teil in die Decke (24) eingelassen ist, so dass sich die Platte (6) entweder auf gleichem Niveau oder auf einem etwas von Niveau der Decke (24) unterschiedlichen Niveau erstreckt.

4. Schiff (1) nach einem der vorangehenden Ansprüche, **dadurch gekennzeichnet, dass** der Kasten (4) ebenfalls Beschallungsmittel (7) aufnimmt.

5. Schiff (1) nach Anspruch 4, **dadurch gekennzeichnet, dass** die Verschlussplatte des Kastens (4) eine Oberfläche zur Verbreitung von Schallwellen darstellt, wobei diese von mindestens einem Audioanreger erzeugt werden.

6. Schiff (1) nach einem der vorangehenden Ansprüche, **dadurch gekennzeichnet, dass** die drei Trennwände (20, 21, 22) unverkleidet und frei von Unebenheiten sind.

## Claims

1. A passenger vessel (1), which includes at least one living space constituted by a cabin (2) which is delimited vertically by at least three contiguous partitions (20, 21, 22), each of these partitions (20, 21, 22) being blind, i.e. free of openings such as a window or a door, said living space (2) also including a ceiling (24) contiguous with said three partitions (20, 21, 22), **characterized by** the fact that said ceiling (24) integrates a cabinet (4) in which are positioned image projection devices (5a, 5b, 5c), which are respectively oriented so as to project each of the images over one of said three partitions (20, 21, 22), that said cabinet (4) is closed by at least one plate (6) with openings (60) for the passage of the light beam (F) from said devices, and that said cabin (2) includes a bed (32) of which the head (320) is oriented in the direction opposite to that of the second (21) of said three partitions (20, 21, 22).

2. The vessel (1) according to claim 1, **characterized by** the fact that said image projection devices (5a, 5b, 5c) are devices with ultra-short focal lengths.

3. The vessel (1) according to one of claims 1 or 2, in which said cabinet (4) occupies only a portion of the ceiling (24) of said cabin (2), **characterized by** the fact that said cabinet (4) is embedded at least partially in the ceiling (24) so that said plate (6) extends either at the same level, or at a slightly different level from that of said ceiling (24).

4. The vessel (1) according to one of the preceding claims, **characterized by** the fact that said cabinet (4) also accommodates a sound system (7).

5. The vessel (1) according to claim 4, **characterized by** the fact that said closure plate of said cabinet (4) constitutes a surface for broadcasting sound waves, the latter being generated by at least one audio exciter.

6. The vessel (1) according to one of the preceding claims, **characterized by** the fact that said three partitions (20, 21, 22) are bare and free of roughness.
